(19) Europäisches Patentamt

European Patent Office

Office européen des brevets

(11) **EP 2 509 355 A1**

(12) **EUROPEAN PATENT APPLICATION**
published in accordance with Art. 153(4) EPC

(43) Date of publication:
**10.10.2012 Bulletin 2012/41**

(21) Application number: **10791225.5**

(22) Date of filing: **13.04.2010**

(51) Int Cl.:
***H04W 28/00*** *(2009.01)*

(86) International application number:
**PCT/CN2010/071746**

(87) International publication number:
**WO 2010/148719 (29.12.2010 Gazette 2010/52)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **10.12.2009 CN 200910225427**

(71) Applicant: **ZTE Corporation**
**Shenzhen, Guangdong 518057 (CN)**

(72) Inventor: **YAN, Jinfeng**
**Shenzhen**
**Guangdong 518057 (CN)**

(74) Representative: **Jansen, Cornelis Marinus et al**
**VEREENIGDE**
**Johan de Wittlaan 7**
**2517 JR Den Haag (NL)**

(54) **METHOD AND DEVICE FOR FREQUENCY SELECTION SCHEDULING**

(57)    The disclosure discloses a method and a device for frequency selection scheduling. Measuring the received power of Sounding Reference Signal (SRS) or Digital Modulation Reference Signal (DMRS) at base station end according to predetermined time and predetermined granularity, and obtaining measuring information (102); whether the measuring information is useable or not is judged, and when judgment result is yes, an equivalent processing is performed to the measuring information according to the assigning type of the optional resource block for scheduling User Equipment (UE), and a frequency selection resource distribution is performed to the UE by using measuring information which is equivalent-processed (104). The method and device in the disclosure enable the demodulating accuracy of data downwards at receiving end to be increased greatly, and effectively promote system performance.

Fig. 1

```
                    ┌─────────────┐
                    │    Start    │
                    └──────┬──────┘
                           │
                           ▼
  ┌────────────────────────────────────────────────┐      102
  │  measuring received power of SRS or DMRS at     │
  │  base station end according to predetermined    │
  │  time and predetermined granularity,            │
  │  and obtaining measuring information            │
  └────────────────────────┬───────────────────────┘
                           │
                           ▼
  ┌────────────────────────────────────────────────┐      104
  │  judging whether the measuring information is   │
  │  useable or not, and performing, when judgment  │
  │  result is yes, an equivalent processing to     │
  │  measuring information according to assigning    │
  │  type of optional resource block for scheduling │
  │  UE, and performing a frequency selection       │
  │  resource distribution to the UE by using       │
  │  measuring information which is equivalent-      │
  │  processed                                       │
  └────────────────────────┬───────────────────────┘
                           │
                           ▼
                    ┌─────────────┐
                    │     End     │
                    └─────────────┘
```

**Description**

**TECHNICAL FIELD**

The disclosure relates to the field of communications, in particular to a method and a device for frequency selection scheduling.

**BACKGROUND**

It is generally considered that uplink and downlink channels have symmetry and reciprocity in long term evolution (LTE) time division dual (TDD) system. One of the current applications of channel symmetry is to estimate the weight of downlink beam inborn nature by the channel H obtained in uplink. Another application is to predict the signal to interference plus noise ration (SINR) value of downlink channel by using SINR information of sounding reference signal (SRS), wherein in the method, the user equipment (UE) end needs to measure the interference level of downlink channel, then the transmitting power of the SRS is multiplied by the inverse of interference power received by the UE end, so there is certain linear relationship between the SINR information measured by uplink SRS at eNodeB (base station) end and SINR measured by downlink channel status; and due to the defect of the method that the computational formula of the SRS transmitting power of protocol has to be modified, the method cannot be adopted. The quality of downlink channel not only depends on downlink channel, but also depends on the interference and the noise received by the UE end; and the quality of uplink channel not only depends on uplink channel, but also depends on the interference and the noise received by base station end. However in terms of TDD system, uplink and downlink channels have reciprocity, while noise and interference do not have such a characteristic, so a big deviation will be generated if downlink SINR information is predicted directly by using the SINR information obtained by uplink measurement.

Current downlink scheduling is performed based on the channel status indicators fed back by the UE end, such as Rank Indicator (RI), Precoding Matrix Indicator (PMI), and Channel Quality Indicator (CQI), etc.. The method has a problem that: the channel status that current sub-frame scheduling refers to is downlink channel status measured at the UE end as to downlink sub-frame at previous N (which is determined by processing time delay and uplink and downlink proportion, etc.) moment, and then is reported by the UE end to be used by the eNodeB, and the eNodeB has the final decision power of downlink scheduling. Due to restricted time delay and feedback frequency of the CQI measurement and report, the timeliness and accuracy of the CQI report are reduced. And especially for non-frequency selection scheduling dependant on wideband CQI report, only average channel status of wideband can be obtained, while the relative relationship of the channel statuses of parts of bandwidths or the channel statuses among sub-bands cannot be obtained. In case of larger bandwidth of LTE system, wideband CQI cannot reflect the frequency selection characteristic of a channel, resulting in certain blindness in distribution of resources, and the performance of system is influenced.

To sum up, there are problems of inaccuracy and lack of frequency selection information caused by too large CQI time delay in scheduling of wideband CQI in the prior art existing for a long time, so it is necessary to put forward the modified technical means to solve the problems.

**SUMMARY**

The disclosure mainly aims to provide a method and a device for frequency selection scheduling, in order to solve the problems of inaccuracy and lack of frequency selection information caused by too large feedback time delay in scheduling of wideband CQI in the prior art.

To solve the problem above, the technical solution of the disclosure is realized by:

a method for frequency selection scheduling, may include:

measuring received power of Sounding Reference Signal (SRS) or Digital Modulation Reference Signal (DMRS) at base station end according to predetermined time and predetermined granularity, and obtaining measuring information;

judging whether the obtained measuring information is useable or not, and performing, when judgment result is yes, an equivalent processing to the measuring information according to the assigning type of resource block for scheduling UE, and performing a frequency selection resource distribution to the UE by using the measuring information which is equivalent-processed.

Before judging whether the measuring information is useable or not, the method may further include:

performing a normalization processing to the measuring information.

The measuring information may include: initial frequency domain position and information acquisition time.

The process of judging whether the measuring information is useable or not may include:

judging whether the measuring information is accordant with timeliness requirement according to the information acquisition time;

keeping judging, if the measuring information is accordant with the timeliness requirement, whether the bandwidth corresponding to the measuring information is not less than the predetermined ratio of the resource number actually distributed to the UE; and determining, when judgment result is yes, that the measuring information is useable.

The assigning type of the resource block of the UE is optional, and the assigning type of the resource block may include at least one of the following: Type0, Type1, LVRB, DVRB;

the process of equivalent processing may include:

performing, if the assigning type of the resource block is Type0 or Type1, the equivalent processing according to the mode of the granularity of resource block group;

performing, if the assigning type of the resource block is LVRB or DVRB, the equivalent processing in the mode of regarding a single resource block as minimum granularity.

The process of frequency selection resource distribution may include:

sorting the measuring information according to the magnitude of the received power, and distributing the frequency domain position corresponding to maximum measuring information in sorting result to the UE preferentially.

A device for frequency selection scheduling, may include:

a measuring module, which is configured to measure received power of SRS or DMRS at base station end according to predetermined time and predetermined granularity, and obtain measuring information;

a judging module, which is configured to judge whether the measuring information obtained by the measuring module is useable or not;

an equivalent processing module, which is configured to perform an equivalent processing to the measuring information according to the assigning type of resource block for scheduling UE, when judgment result of the judging module is that the measuring information is useable;

a frequency selection resource distribution applying module, which is configured to perform a frequency selection resource distribution to the UE by using the measuring information which is equivalent-processed by the equivalent processing module.

The device may further include:

a normalization processing module, which is connected with the measuring module and the judging module respectively, and is configured to perform a normalization processing to the measuring information obtained by the measuring module, and enable the judging module to schedule the measuring information which is normalization-processed.

The measuring information may include: initial frequency domain position and information acquisition time;

the judging module may further include:

a first judging module, which is configured to judge whether the measuring information is accordant with timeliness requirement according to the information acquisition time; and

a second judging module, which is configured to, when judgment result of the first judging module is yes, keep judging whether the bandwidth corresponding to the measuring information is not less than the predetermined ratio of the resource number actually distributed to the UE.

The assigning type of the resource block of the UE is optional, and the assigning type of the resource block may include at least one of the following: Type0, Type1, LVRB, DVRB; the equivalent processing module may includes:

a first equivalent processing module, which is configured to, when the assigning type of the resource block is Type0 or Type1, perform the equivalent processing according to the mode of granularity of resource block group;

a second equivalent processing module, which is configured to, when the assigning type of the resource block is LVRB or DVRB, perform the equivalent processing in the mode of regarding a single resource block as minimum granularity.

The frequency selection resource distribution applying module may include:

a sorting module, which is configured to sort the measuring information according to the magnitude of the received power; and

a distributing module, which is configured to distribute the frequency domain position corresponding to the maximum measuring information in the sorting result of the sorting module to the UE preferentially.

The difference between above technical solution provided by the disclosure and the prior art lies in that: by the disclosure, the relative relationship of channels at different frequency domain positions of downlink channel at current moment is predicted by using relative relationship of the received signal power of sounding reference signal or digital modulation reference signal at eNodeB side obtained by uplink measurement among different frequency domain positions, so that information of frequency selection scheduling is provided for non-frequency selection scheduling, which enables the demodulating accuracy of data downwards at receiving end to be increased greatly, and system performance is effectively promoted.

## BRIEF DESCRIPTION OF THE DRAWINGS

Fig. 1 shows a flowchart of a method for frequency selection scheduling according to the embodiment of the disclosure;

Fig. 2 shows a schematic diagram of time sequence of SRS and CQI measurement and report according to the embodiment of the disclosure;

Fig. 3 shows a block diagram of a device for frequency selection scheduling according to the embodiment of the disclosure;

Fig. 4 shows a block diagram of a preferred structure of a device for frequency selection scheduling according to the embodiment of the disclosure.

## DETAILED DESCRIPTION

The disclosure mainly provides a method for frequency selection scheduling used in LTE TDD, the relative relationship of channels at different frequency domain positions of downlink channel at current moment is predicted by using relative relationship of the received signal power of SRS or Digital Modulation Reference Signal (DMRS) at eNodeB side obtained by uplink measurement among different frequency domain positions according to the reciprocity of uplink and downlink channels of TDD, so that information of frequency selection scheduling is provided for non-frequency selection scheduling. Preferably, the technical solution of the disclosure is applicable to a scene capable of acquiring the SRS received power information with large bandwidth within a certain time threshold.
To make the purpose, technical solution and advantages of the disclosure clearer, the disclosure is described below with reference to the accompanying drawings and embodiments in detail.
A method for frequency selection scheduling is provided according to the embodiment of the disclosure.

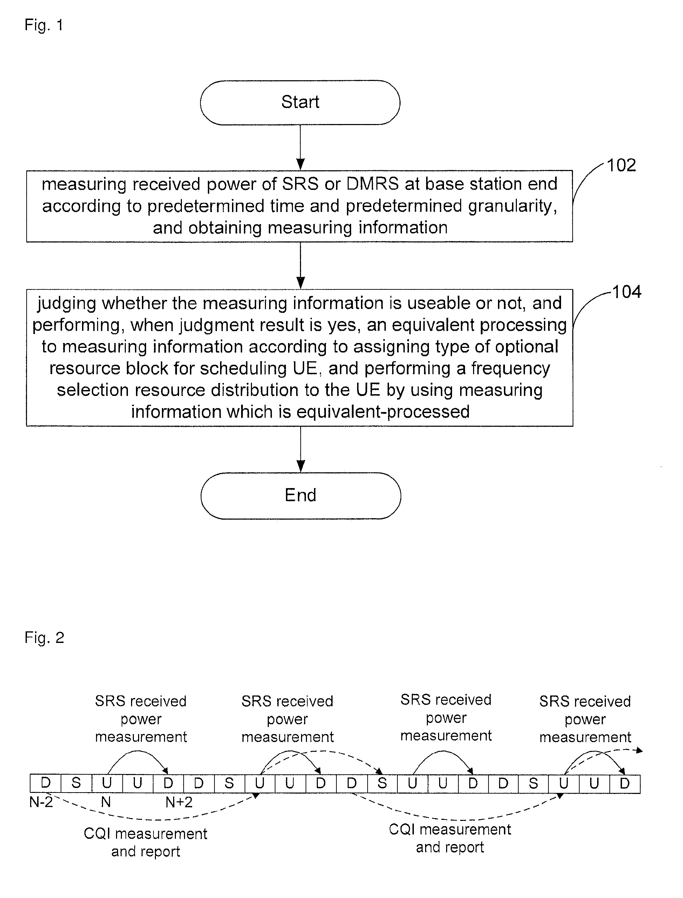

Fig. 1 shows the flowchart of the method for frequency selection scheduling according to the embodiment of the disclosure; as shown in Fig. 1, the method includes:

Step 102, measuring received power of SRS or DMRS at base station end according to predetermined time and predetermined granularity, and obtaining measuring information;

Step 104, judging whether the measuring information is useable or not, and performing, when judgment result is yes, an equivalent processing to measuring information according to assigning type of optional resource block (RB) for scheduling UE, and performing a frequency selection resource distribution to the UE by using measuring information which is equivalent-processed.

The above processing is described below in detail.

1. Step 102

Uplink channel estimation can be obtained by SRS or DMRS, however since DMRS and uplink data are transmitted simultaneously, only the channel of a part corresponding to data can be estimated, so SRS is generally adopted for performing channel estimation and uplink signal power estimation.

The signal power P'_SRS of SRS at base station end is measured, SRS reports the granularity of measuring information to be N, which is 4RB at least, RB is the minimum unit of frequency domain transmission data, and every N RSs record a group of measuring information to be P'_SRS (f, t), wherein f represents the initial frequency domain position corresponding to the parameter, and t represents information acquisition time.

Note that, prior to Step 104, a normalization processing has to be performed to the measuring information. Normalization processing is performed to the SRS received power according to formula (1):

$$P'\_SRS\ (f,\ t) = P_r(f,t)/P_t(f,t) \qquad\qquad \text{formula (1)}$$

wherein, $P_r(f,t)$ represents the received power of this frequency band, and $P_t(f,t)$ represents transmitting power of the frequency band.

2. Step 104

In Step 104, judging whether the measuring information is useable or not include following two aspects:

1, judging whether the measuring information is accordant with timeliness requirement according to information acquisition time, and the judgment of the information timeliness is performed according to formula (2):

$$T_{current} - t \leqslant T_{gap} \qquad\qquad \text{formula (2)}$$

wherein, the $T_{current}$ is current sub-frame, $T_{gap}$ is the time threshold of information validity judgment, and $T_{gap}$ is generally less than wideband CQI period. The measuring information P_SRS(f,t) accordant with formula 2 is obtained, N RB information corresponding to P_SRS(f,t) is represented by P_SRS(f,t), and marked as P_SRS(f',t), wherein the granularity of f' is single RB.

2, keeping judging, if the measuring information is accordant with the timeliness requirement, whether the bandwidth corresponding to the measuring information is not less than the predetermined ratio of the resource number actually distributed to UE; namely, comparing the bandwidth corresponding to the measuring information with RB_allocated x η, and if the bandwidth corresponding to the measuring information is more than or equal to RB_allocated x η, the measuring information is useable for frequency selection scheduling, otherwise the information is not useable, wherein RB_allocated represents the number of resources distributed to UE, η is a scale factor and is larger than 1.

Then, performing equivalent processing to the measuring information according to the assigning type of optional RB for scheduling UE.

The assigning type of the optional RB of the UE includes, but is not limited to types of: Type0, Type1, Centralized Virtual RB (LVRB), Distributed Virtual RB (DVRB), etc.; equivalent processing is performed to the measuring information and information P_SRS(f'',t) matching the measuring information, wherein f'' is the frequency domain position starting point matching the assigning type of RB.

If the UE selects between Type0 and Type01 of RB assigning types, the equivalent is recommended to be performed to the information according to the granularity of RB group, namely RBG; and if the UE selects between LVRB and LVRB of RB assigning types, the minimum granularity of the information can be single RB, wherein some relatively mature methods in the prior art can be adopted for the method of information equivalent processing, for example, weighted average, maximum ratio combining, etc.. A schematic example is described below as an illustration, but is not limited to the method,

$$P\_SRS(f'',t) = \frac{\sum_{i=1}^{N} P\_SRS(f'(i),t)}{N}$$

wherein, i represents the corresponding RB in each RBG group, f'(i) represents the system bandwidth frequency domain position corresponding to the $i^{th}$ RB, and N represents the number of RBs included in RBG.

Finally, sorting according to P_SRS(f'',t) information, wherein the frequency domain position corresponding to high P_SRS(f'',t) is distributed to the UE preferentially.

The example of the disclosure is further described in detail below with reference to the accompanying Fig. 2 according to the assigning types of optional RB of the UE respectively. Fig. 2 shows the schematic diagram of time sequence of SRS and CQI measurement and report according to the embodiment of the disclosure.

Example 1

For illustration purpose, the following settings are made in assumption that DL system bandwidth is 10 MHz, the number of RBs is 50, wideband CQI report period is 10 ms, uplink and downlink proportion is 1, the bandwidth of certain UE SRS report in a cell is configured to be 48 RB, the bandwidth of UE SRS is also 48 RB, report period is 5 ms; the sub-frame offset of CQI is 0, and the sub-frame offset of SRS is 2; the RB assigning type of the UE is LVRB, and the measuring granularity of SRS is 4 RB. $T_{gap}$ is set to be equal to 6 ms. The method for frequency selection scheduling according to example 1 of the disclosure includes that:

1) the received signal power (the granularity is 4 RB) of SRS is measured at the first U of DSUUDDSUUD. This uplink sub-frame is set to be N, then SRS information can be used for scheduling at the moment of N+2. The signal received power P_SRS(f,t) corresponding to 48 RB is measured, wherein each f corresponds to frequency domain initial positions of four RBs.

2) to the RB that no SRS is transmitted on two sides of system bandwidth, the value of the RB is replaced by P_SRS(f,t) value of adjacent RB thereof. The full bandwidth P'_SRS(f,t) is obtained at this moment. The transmitting power of each RB is P(t), so the normalized power is P_SRS(f,t) = P'_SRS(f,t)/P(t).

3) before new SRS measurement value is generated at N+2 and later, the P_SRS(f,t) information assists scheduling module in frequency selection scheduling.

4) when current moment is N+2, the P_SRS(f,t) information can be used for performing frequency selection resource distribution at this moment.

5) in assumption that current RB assigning type of the UE is LVRB, the 4 RB corresponding to each group of P'_SRS(f,t) information is replaced by P_SRS(f',t) = P'_SRS(f,t)/P(t), wherein the unit of f' is RB, wherein P(t) represents the transmitting power of SRS.

6) assuming that the number of currently distributed RBs is RB_allocated = 16 RB, the bandwidth corresponding to valid P'_SRS(f,t) at this moment is 48 RB, which is more than or equal to RB_allocated x η (η = 2), now the frequency selection scheduling information can be used for performing selection of distributing resource position of RB.

7) performing sorting according to the size of P_SRS(f',t).

8) the position corresponding to RB with the highest P_SRS(f',t) value and is not occupied is taken as preferred reference of resource distributing position. Since LVRB requires continuous resources, the RB with the highest P_SRS (f',t) value and is not occupied can only be taken as a preferred point of RB position distribution.

Example 2

According to the above example, assuming that DL system bandwidth is 10 MHz, the number of RBs is 50, wideband CQI report period is 10 ms, uplink and downlink proportion is 1, the bandwidth of certain UE SRS report in a cell is configured to be 48 RB, the bandwidth of UE SRS is also 48 RB, report period is 5 ms; the sub-frame offset of CQI is 0, and the sub-frame offset of SRS is 2; the RB assigning type of the UE is Type0, and the measuring granularity of SRS is 4 RB. $T_{gap}$ is set to be equal to 6 ms. The method for frequency selection scheduling according to example 2 of the disclosure includes that:

1) the received signal power (the granularity is 4 RB) of SRS is measured at the first U of DSUUDDSUUD. This uplink sub-frame is set to be N, then SRS information can be used for scheduling at the moment of N+2. The signal received power P_SRS(f,t) corresponding to 48 RB is measured, wherein each f corresponds to frequency domain initial positions of four RBs.

2) to the RB that no SRS is transmitted on two sides of system bandwidth, the value of the RB is replaced by P_SRS(f,t) value of adjacent RB thereof. The full bandwidth P'_SRS(f,t) is obtained at this moment. The transmitting power of each RB is P(t), so the normalized power is P_SRS(f,t) = P'_SRS(f,t)/P(t).

3) before new SRS measurement value is generated at N+2 and later, the P_SRS(f,t) information assists scheduling module in frequency selection scheduling.

4) when current moment is N+2, the P_SRS(f,t) information can be used for performing frequency selection resource distribution at this moment.

5) in assumption that current RB assigning type of the UE is Type0, the 4 RB corresponding to each group of P'_SRS(f,t) information is replaced by P_SRS(f',t) = P'_SRS(f,t)/P(t), wherein the unit of f' is RB, the P'_SRS(f',t) information of RB assigning type Type0, in which the corresponding granularity of RBG group is 3, is equalized at this moment.

6) assumming that the number of currently distributed RBs is RB_allocated = 15 RB, the bandwidth corresponding to valid P'_SRS(f,t) at this moment is 48 RB, which is more than or equal to RB_allocated x $\eta$ ($\eta$ = 2), now the frequency selection scheduling information can be used for performing selection of distributing resource position of RB.

7) performing sorting according to the size of P_SRS(f',t).

8) as Type0 is adopted, the position of RB can be discrete, and the position corresponding to RB with the highest P_SRS(f',t) value and is not occupied can be distributed to the UE, until requirement is met.

A device for frequency selection scheduling is further provided according to the embodiment of the disclosure.

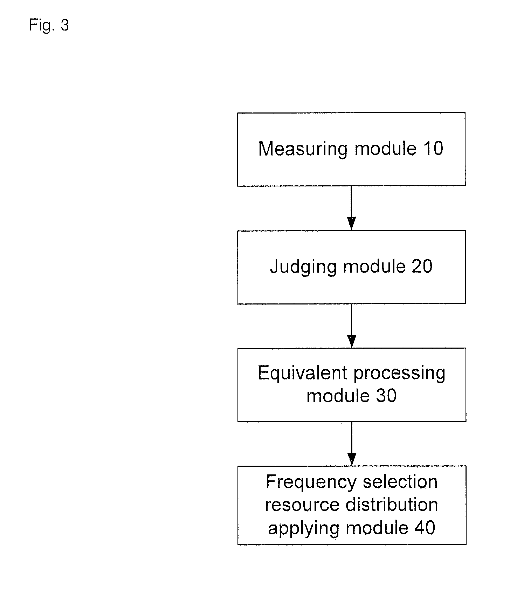

Fig. 3 shows the block diagram of the device for frequency selection scheduling according to the embodiment of the disclosure. As shown in Fig. 3, the device includes: a measuring module 10, a judging module 20, an equivalent processing module 30, and a frequency selection resource distribution applying module 40.

The measuring module 10 is configured to measuring received power of SRS or DMRS at base station end according to predetermined time and predetermined granularity, and obtaining measuring information; wherein the measuring information includes but is not limited to initial frequency domain position and information acquisition time.

The judging module 20 is connected with the measuring module 10, and is configured to judge whether the measuring information obtained by the measuring module 10 is useable or not; the judging module 20 may further include: a first judging module, which is configured to judge whether the measuring information is accordant with timeliness requirement according to the information acquisition time; and a second judging module, which is configured to, if the judgment result of the first judging module is yes, keep judging whether the bandwidth corresponding to the measuring information is not less than the predetermined ratio of the resource number actually distributed to the UE.

The equivalent processing module 30 is connected with the judging module 20, and is configured to, under the condition that the judgment result of the judging module 20 is that the measuring information is useable, perform an equivalent processing to the measuring information according to the assigning type of the optional resource block for scheduling the UE. In specific application, the assigning type of the optional resource block of the UE includes at least one of the following: Type0, Type1, LVRB, DVRB. The equivalent processing module 30 may further include: a first equivalent processing module, which is configured to, when the assigning type of the optional resource block of the UE is Type0 or Type1, perform the equivalent processing according to the mode of granularity of resource block group; and a second equivalent processing module, which is configured to, when the assigning type of the optional resource block of the UE is LVRB or DVRB, perform equivalent processing in the mode of regarding a single resource block as minimum granularity.

The frequency selection resource distribution applying module 40 is connected with the equivalent processing module 30, and is configured to perform a frequency selection resource distribution to the UE by using the measuring information which is equivalent-processed by the equivalent processing module 30. The frequency selection resource distribution applying module 40 may further include: a sorting module, which is configured to sort the measuring information according to the magnitude of received power; a distributing module, which is configured to distribute the frequency domain position corresponding to the maximum measuring information in sorting result of the sorting module to the UE preferentially.

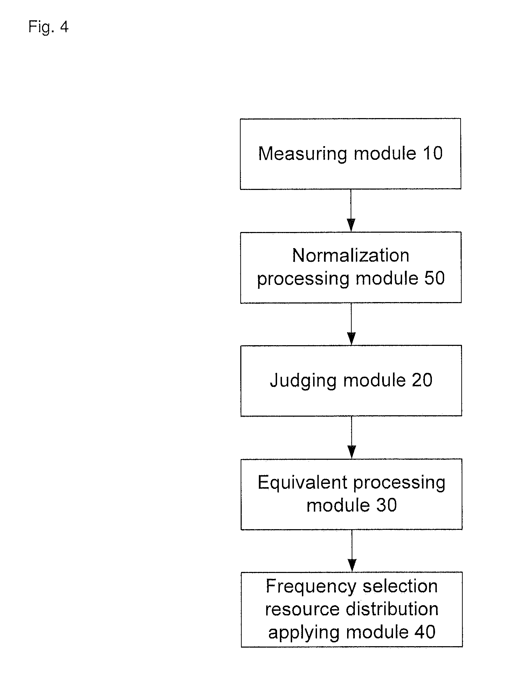

Fig. 4 shows the block diagram of a preferred structure of the device for frequency selection scheduling according to the embodiment of the disclosure. As shown in Fig. 4, on the basis of the structure shown in Fig. 3, the device further includes: a normalization processing module 50, which is connected with the measuring module 10 and the judging module 20 respectively, and is configured to perform a normalization processing to the measuring information obtained by the measuring module 10, and enable the judging module 20 to schedule the measuring information which is normalization-pracessed.

To sum up, according to above technical solution of the disclosure, the relative relationship of channels at different frequency domain positions of downlink channel at current moment is predicted by using relative relationship of the received signal power of SRS or DMRS at eNodeB side obtained by uplink measurement among different frequency domain positions, so that information of frequency selection scheduling is provided for non-frequency selection scheduling, the transmitting accuracy of data downwards at receiving end is increased, the throughput of system is promoted, and system performance is effectively promoted.

The above is only the embodiment of the disclosure and not intended to limit the disclosure. Those skilled in the field can make various alterations and changes. Any modifications, equivalent replacements, improvements and the like within the spirit and principle of the disclosure shall fall within the scope of protection of the claims of the disclosure.

**Claims**

1. A method for frequency selection scheduling, wherein the method comprises:

   measuring received power of Sounding Reference Signal (SRS) or Digital Modulation Reference Signal (DMRS) at base station end according to predetermined time and predetermined granularity, and obtaining measuring information;
   judging whether the obtained measuring information is useable or not, and performing, when judgment result is yes, an equivalent processing to the measuring information according to the assigning type of resource block for scheduling user equipment (UE), and performing a frequency selection resource distribution to the UE by using the measuring information which is equivalent-processed.

2. The method according to claim 1, wherein before judging whether the measuring information is useable or not, the method further comprises:

   performing a normalization processing to the measuring information.

3. The method according to claim 1, wherein the measuring information comprises:

   initial frequency domain position and information acquisition time.

4. The method according to claim 3, wherein the process of judging whether the measuring information is useable or not comprises:

   judging whether the measuring information is accordant with timeliness requirement according to the information acquisition time;
   keeping judging, if the measuring information is accordant with the timeliness requirement, whether the bandwidth corresponding to the measuring information is not less than the predetermined ratio of the resource number actually distributed to the UE; and determining, when judgment result is yes, that the measuring information is useable.

5. The method according to any one of claims 1 to 4, wherein the assigning type of the resource block of the UE is optional, and the assigning type of the resource block comprises at least one of the following: Type0, Type1, LVRB, DVRB;
   the process of equivalent processing comprises:

   performing, if the assigning type of the resource block is Type0 or Type1, the equivalent processing according to the mode of granularity of resource block group;
   performing, if the assigning type of the resource block is LVRB or DVRB, the equivalent processing in the mode of regarding a single resource block as minimum granularity.

6. The method according to claim 5, wherein the process of frequency selection resource distribution comprises:

   sorting the measuring information according to the magnitude of the received power, and distributing the frequency domain position corresponding to maximum measuring information in sorting result to the UE preferentially.

7. A device for frequency selection scheduling, wherein the device comprises:

   a measuring module, which is configured to measure received power of SRS or DMRS at base station end according to predetermined time and predetermined granularity, and obtain measuring information;

a judging module, which is configured to judge whether the measuring information obtained by the measuring module is useable or not;

an equivalent processing module, which is configured to perform an equivalent processing to the measuring information according to the assigning type of resource block for scheduling UE when judgment result of the judging module is that the measuring information is useable;

a frequency selection resource distribution applying module, which is configured to perform a frequency selection resource distribution to the UE by using the measuring information which is equivalent-processed by the equivalent processing module.

8.   The device according to claim 7, wherein the device further comprises:

a normalization processing module, which is connected with the measuring module and the judging module respectively, and is configured to perform a normalization processing to the measuring information obtained by the measuring module, and enable the judging module to schedule the measuring information which is normalization-processed.

9.   The device according to claim 7 or 8, wherein:

the measuring information comprises: initial frequency domain position and information acquisition time;
the judging module comprises:
a first judging module, which is configured to judge whether the measuring information is accordant with timeliness requirement according to the information acquisition time; and
a second judging module, which is configured to, when judgment result of the first judging module is yes, keep judging whether the bandwidth corresponding to the measuring information is not less than the predetermined ratio of the resource number actually distributed to the UE.

10.  The device according to claim 7 or 8, wherein the assigning type of the resource block of the UE is optional, and the assigning type of the resource block comprises at least one of the following: Type0, Type1, LVRB, DVRB; the equivalent processing module comprises:

a first equivalent processing module, which is configured to, when the assigning type of the resource block is Type0 or Type1, perform the equivalent processing according to the mode of granularity of resource block group; and
a second equivalent processing module, which is configured to, when the assigning type of the resource block is LVRB or DVRB, perform the equivalent processing in the mode of regarding a single resource block as minimum granularity.

11.  The device according to claim 7 or 8, wherein the frequency selection resource distribution applying module comprises:

a sorting module, which is configured to sort the measuring information according to the magnitude of the received power; and
a distributing module, which is configured to distribute the frequency domain position corresponding to the maximum measuring information in the sorting result of the sorting module to the UE preferentially.

Fig. 1

```
                    ┌─────────────────┐
                    │      Start      │
                    └────────┬────────┘
                             │
                             ▼
┌────────────────────────────────────────────────────────┐    ╱─102
│ measuring received power of SRS or DMRS at base station │ ╱
│ end according to predetermined time and predetermined   │
│ granularity, and obtaining measuring information        │
└────────────────────────────┬───────────────────────────┘
                             │
                             ▼
┌────────────────────────────────────────────────────────┐    ╱─104
│ judging whether the measuring information is useable or │ ╱
│ not, and performing, when judgment result is yes, an    │
│ equivalent processing to measuring information according│
│ to assigning type of optional resource block for        │
│ scheduling UE, and performing a frequency selection     │
│ resource distribution to the UE by using measuring      │
│ information which is equivalent-processed               │
└────────────────────────────┬───────────────────────────┘
                             │
                             ▼
                    ┌─────────────────┐
                    │       End       │
                    └─────────────────┘
```

Fig. 2

| SRS received power measurement | SRS received power measurement | SRS received power measurement | SRS received power measurement |

| D | S | U | U | D | D | S | U | U | D | D | S | U | U | D | D | S | U | U | D |

N-2    N    N+2

CQI measurement and report        CQI measurement and report

Fig. 3

```
┌─────────────────────────┐
│   Measuring module 10   │
└─────────────────────────┘
             │
             ▼
┌─────────────────────────┐
│    Judging module 20    │
└─────────────────────────┘
             │
             ▼
┌─────────────────────────┐
│  Equivalent processing  │
│       module 30         │
└─────────────────────────┘
             │
             ▼
┌─────────────────────────┐
│   Frequency selection   │
│  resource distribution  │
│   applying module 40    │
└─────────────────────────┘
```

Fig. 4

```
┌─────────────────────────┐
│   Measuring module 10   │
└─────────────────────────┘
             │
             ▼
┌─────────────────────────┐
│      Normalization      │
│  processing module 50   │
└─────────────────────────┘
             │
             ▼
┌─────────────────────────┐
│   Judging module 20     │
└─────────────────────────┘
             │
             ▼
┌─────────────────────────┐
│  Equivalent processing  │
│       module 30         │
└─────────────────────────┘
             │
             ▼
┌─────────────────────────┐
│   Frequency selection   │
│  resource distribution  │
│   applying module 40    │
└─────────────────────────┘
```

# INTERNATIONAL SEARCH REPORT

| International application No. |
| --- |
| PCT/CN2010/071746 |

**A. CLASSIFICATION OF SUBJECT MATTER**

H04W28/00 (2009.01) i

According to International Patent Classification (IPC) or to both national classification and IPC

**B. FIELDS SEARCHED**

Minimum documentation searched (classification system followed by classification symbols)

IPC: H04W28/-, H04L27/-

Documentation searched other than minimum documentation to the extent that such documents are included in the fields searched

Electronic data base consulted during the international search (name of data base and, where practicable, search terms used)

CPRSABS, CNKI, WPI, EPODOC: ：SRS/sounding w reference w signal，DMRS/digital w modulation w reference w signal，power，frequency, select+/choos+，schedul+，distribut+/allocat+/assign+，resource

**C. DOCUMENTS CONSIDERED TO BE RELEVANT**

| Category* | Citation of document, with indication, where appropriate, of the relevant passages | Relevant to claim No. |
| --- | --- | --- |
| A | CN101588590A (CHINA MOBILE COMM CORP) 25 Nov. 2009 (25.11.2009) the whole document | 1-11 |
| A | CN101079859A (SHANGHAI ULTIMATE POWER COMM) 28 Nov. 2007 (28.11.2007) the whole document | 1-11 |
| A | CN101127747A (DATANG MOBILE COMM EQUIP CO) 20 Feb. 2008 (20.02.2008) the whole document | 1-11 |
| A | US2008045260A1 (MUHAREMOVIC T et al.) 21 Feb. 2008 (21.02.2008) the whole document | 1-11 |

☐ Further documents are listed in the continuation of Box C.　　　☒ See patent family annex.

| | |
| --- | --- |
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim (S) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"document member of the same patent family |

| Date of the actual completion of the international search | Date of mailing of the international search report |
| --- | --- |
| 17 Aug. 2010 (17.08.2010) | **09 Sep. 2010 (09.09.2010)** |

| Name and mailing address of the ISA/CN | Authorized officer |
| --- | --- |
| The State Intellectual Property Office, the P.R.China<br>6 Xitucheng Rd., Jimen Bridge, Haidian District, Beijing, China 100088<br>Facsimile No. 86-10-62019451 | **ZHANG, Yanqing**<br>Telephone No. (86-10)62411428 |

Form PCT/ISA /210 (second sheet) (July 2009)

## INTERNATIONAL SEARCH REPORT
### Information on patent family members

| | International application No. |
|---|---|
| | PCT/CN2010/071746 |

| Patent Documents referred in the Report | Publication Date | Patent Family | Publication Date |
|---|---|---|---|
| CN101588590A | 25.11.2009 | None | |
| CN101079859A | 28.11.2007 | None | |
| CN101127747A | 20.02.2008 | WO2008019600A1 | 21.02.2008 |
| | | KR20080090392A | 08.10.2008 |
| | | US2009052357A1 | 26.02.2009 |
| | | EP2053770A1 | 29.04.2009 |
| | | JP2009516438T | 16.04.2009 |
| | | INMUMNP200801853E | 13.02.2009 |
| | | KR100945341B1 | 08.03.2010 |
| US2008045260A1 | 21.02.2008 | US2008045259A1 | 21.02.2008 |

Form PCT/ISA /210 (patent family annex) (July 2009)